(19) Europäisches Patentamt / European Patent Office / Office européen des brevets

(11) **EP 2 057 214 B1**

(12) **EUROPÄISCHE PATENTSCHRIFT**

(45) Veröffentlichungstag und Bekanntmachung des Hinweises auf die Patenterteilung:
**11.11.2015 Patentblatt 2015/46**

(21) Anmeldenummer: **07802932.9**

(22) Anmeldetag: **27.08.2007**

(51) Int Cl.:
*C08K 3/22* (2006.01)        *C08K 9/02* (2006.01)
*C08K 9/04* (2006.01)        *C08K 9/06* (2006.01)
*C08K 9/08* (2006.01)

(86) Internationale Anmeldenummer:
**PCT/EP2007/058894**

(87) Internationale Veröffentlichungsnummer:
**WO 2008/023076 (28.02.2008 Gazette 2008/09)**

(54) **TITANDIOXID ENTHALTENDES KOMPOSIT**

TITANIUM DIOXIDE-CONTAINING COMPOSITE

COMPOSITE CONTENANT DU DIOXYDE DE TITANE

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **25.08.2006 DE 102006039856**

(43) Veröffentlichungstag der Anmeldung:
**13.05.2009 Patentblatt 2009/20**

(73) Patentinhaber:
- **Sachtleben Chemie GmbH**
  **47198 Duisburg (DE)**
- **Institut Für Verbundwerkstoffe GmbH**
  **67663 Kaiserslautern (DE)**

(72) Erfinder:
- **GROTHE, Sonja**
  **46244 Bottrop (DE)**
- **FRITZEN, Petra**
  **47228 Duisburg (DE)**
- **WINKLER, Jochen**
  **47509 Rheurdt (DE)**

- **ROHE, Bernd**
  **46539 Dinslaken (DE)**
- **BITTMANN, Birgit**
  **67663 Kaiserslautern (DE)**
- **HAUPERT, Frank**
  **67705 Stelzenberg (DE)**
- **KNÖR, Nicole**
  **67663 Kaiserslautern (DE)**

(74) Vertreter: **Nobbe, Matthias**
**Demski & Nobbe**
**Patentanwälte**
**Reichspräsidentenstraße 21-25**
**45470 Mülheim a.d. Ruhr (DE)**

(56) Entgegenhaltungen:
EP-A- 0 870 731        EP-A- 1 571 180
WO-A-02/051945        WO-A-2006/127746
WO-A-2007/052851        JP-A- 2000 297 161
JP-A- 2003 239 099

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Gegenstand der Erfindung ist ein Titandioxid enthaltendes Komposit, ein Verfahren zu dessen Herstellung und die Verwendung dieses Komposits.

Aus der Anwendung von konventionellen Füllstoffen und Pigmenten, auch Additive genannt, in polymeren Systemen ist bekannt, dass die Art und die Stärke der Wechselwirkungen zwischen den Partikeln des Füllstoffs bzw. Pigments und der polymeren Matrix die Eigenschaften eines Komposits beeinflusst. Durch gezielte Oberflächenmodifizierung können die Wechselwirkungen zwischen den Partikeln und der polymeren Matrix modifiziert und somit die Eigenschaften des Systems aus Füllstoffen und Pigmenten in einer polymeren Matrix, im folgenden auch Komposit genannt, verändert werden. Eine übliche Art der Oberflächenmodifizierung ist die Funktionalisierung der Partikeloberflächen unter Verwendung von Alkoxyalkylsilanen. Die Oberflächenmodifizierung kann dazu dienen, die Verträglichkeit der Partikel mit der Matrix zu erhöhen. Darüber hinaus kann durch die geeignete Auswahl von funktionellen Gruppen auch eine Anbindung der Partikel an die Matrix erreicht werden.

Eine zweite Möglichkeit zur Verbesserung der mechanischen Eigenschaften von polymeren Materialien ist die Verwendung von ultrafeinen Partikeln. US-B-6 667 360 offenbart polymere Komposite, die 1 bis 50 Gew.-% Nanopartikel mit Partikelgrößen von 1 bis 100 nm enthalten. Als Nanopartikel werden Metalloxide, Metallsulfide, Metallnitride, Metallcarbide, Metallfluoride und Metallchloride vorgeschlagen, wobei die Oberfläche dieser Partikel unmodifiziert ist. Als polymere Matrix werden Epoxide, Polycarbonate, Silikone, Polyester, Polyether, Polyolefine, synthetischer Kautschuk, Polyurethane, Polyamid, Polystyrene, Polyphenylene Oxide, Polyketone und Copolymere sowie Mischung davon genannt. Die in US-B-6 667 360 offenbarten Komposite sollen im Vergleich zum ungefüllten Polymer verbesserte mechanische Eigenschaften, insbesondere Zugeigenschaften und Kratzfestigkeiten, aufweisen.

Ein weiterer Nachteil der im Stand der Technik beschriebenen, mit Füllstoffen modifizierten Komposite sind deren für viele Anwendungen unzureichenden mechanischen Eigenschaften.

Aufgabe der vorliegenden Erfindung ist es, die Nachteile des Standes der Technik zu überwinden.

Insbesondere Aufgabe der Erfindung ist es, ein Komposit zur Verfügung zu stellen, das im Vergleich zu Kompositen aus dem Stand der Technik deutlich verbesserte Biegemodule, Biegefestigkeiten, Zugmodule, Zugfestigkeiten, Risszähigkeiten, Bruchzähigkeiten, Schlagzähigkeiten und Verschleißraten besitzt.

Dies ist für bestimmte Anwendungen von Kompositmaterialien, beispielsweise im Automobil-, Flugzeug- oder Luftfahrtbereich von großer Bedeutung. So sind verringerte Verschleißraten bei Gleitlagern, Zahnrädern oder Walzen- und Kolbenbeschichtungen gewünscht. Gerade diese Bauteile sollen eine lange Lebensdauer aufweisen und somit zu verlängerten Standzeiten von Maschinen führen. In Synthesefasern beispielsweise aus PA6, PA66 oder PET können die Reißfestigkeiten verbessert werden.

Überraschenderweise wurde die Aufgabe durch erfindungsgemäße Komposite mit den Merkmalen des Hauptanspruchs gelöst. Vorzugsweise Ausgestaltungen sind in den Unteransprüchen charakterisiert.

Überraschenderweise wurden auch bei der Verwendung von gefälltem, oberflächenmodifiziertem Titandioxid mit Kristallitgrößen $d_{50}$ kleiner 350 nm (gemessen nach dem Debye-Scherrer-Verfahren) die mechanischen und tribologischen Eigenschaften von Polymer-Kompositen stark verbessert. Erstaunlicherweise wirkt sich eine physikalische Bindung zwischen Partikel und Matrix besonders günstig auf die Verbesserung der mechanischen und tribologischen Eigenschaften des Komposits aus.

Das erfindungsgemäße Komposit enthält eine polymere Matrix und 0,1 bis 60 Gew.-% gefällten Titandioxidpartikeln mit einer mittleren Kristallitgrößen $d_{50}$ kleiner 350 nm (gemessen nach dem Debye-Scherrer-Verfahren). Bevorzugt beträgt die Kristallitgröße $d_{50}$ weniger als 200 nm, besonders bevorzugt 3 bis 50 nm. Die Titandioxidpartikel können sphärische oder stäbchenförmige Morphologie besitzen.

Weiterhin können die erfindungsgemäßen Komposite dem Fachmann an sich bekannte Bestandteile enthalten, beispielsweise mineralische Füllstoffe, Glasfasern, Stabilisatoren, Prozessadditive ((auch protective systems genannt) z. B. Dispergierhilfen, Trennmittel, Antioxidantien, Antiozonantien u.a.), Pigmente, Flammschutzmittel (z. B. Aluminiumhydroxid, Antimontrioxid, Magnesiumhydroxid" u. a.), Vulkanisationsbeschleuniger, Vulkanisationsverzögerer, Zinkoxid, Stearinsäure, Schwefel, Peroxid und/oder Weichmacher.

Ein erfindungsgemäßes Komposit kann beispielsweise zusätzlich bis zu 80 Gew.-%, vorzugsweise 10 bis 80 Gew.-%, mineralische Füllstoffe und/oder Glasfasern, bis zu 10 Gew.-%, vorzugsweise 0,05 bis 10 Gew.-% Stabilisatoren und Prozessadditive (z. B. Dispergierhilfen, Trennmittel, Antioxidantien, u. a.), bis zu 10 Gew.-% Pigment und bis zu 40 Gew.-% Flammschutzmittel (z. B. Aluminiumhydroxid, Antimontrioxid, Magnesiumhydroxid" u. a.) enthalten.

Ein erfindungsgemäßes Komposit kann beispielsweise 0,1 bis 60 Gew.-% Titandioxid, 0 bis 80 Gew.-% mineralische Füllstoffe und/oder Glasfasern, 0,05 bis 10 Gew.-% Stabilisatoren und Prozessadditive (z. B. Dispergierhilfen, Trennmittel, Antioxidantien, u. a.), 0 bis 10 Gew.-% Pigment, 0 bis 40 Gew.-% Flammschutzmittel (z. B. Aluminiumhydroxid, Antimontrioxid, Magnesiumhydroxid, u. a.) enthalten.

Die polymere Matrix kann aus einem Thermoplast, einem Hochleistungskunststoff oder einem Epoxidharz bestehen. Als thermoplastische Materialien sind beispielsweise Polyester, Polyamid, PET, Polyethylen, Polypropylen, Polystyrol, dessen Copolymerisate und Blends, Polycarbonat, PMMA, oder Polyvinylchlorid geeignet. Als Hochleistungskunststoffe sind PTFE, Fluor-Thermoplaste (z. B. FEP, PFA, u.a.), PVDF, Polysulfone (z. B. PES, PSU, PPSU, u.a.), Polyetherimid, flüssigkristalline Polymere und Polyetherketone geeignet. Weiterhin eignen sich Epoxidharze als polymere Matrix.

Das erfindungsgemäße Komposit kann 0,1 bis 60 Gew.-% gefälltes, oberflächenmodifiziertes Titandioxid, 0 bis 80 Gew.-% mineralische Füllstoffe und/oder Glasfasern, 0,05 bis 10 Gew.-% Stabilisatoren und Prozessadditive (z. B. Dispergierhilfen, Trennmittel, Antioxidantien, u. a.), 0 bis 10 Gew.-% Pigment, 0 bis 40 Gew.-% Flammschutzmittel (z. B. Aluminiumhydroxid, Antimontrioxid, Magnesiumhydroxid, u. a.) enthalten.

Erfindungsgemäß können ultrafeine Titandioxidpartikel eingesetzt werden, die eine anorganische und/oder eine organische Oberflächenmodifizierung besitzen.

Die anorganische Oberflächenmodifizierung des ultrafeinen Titandioxids besteht typischerweise aus Verbindungen, die mindestens zwei der folgenden Elemente enthalten: Aluminium-, Antimon-, Barium-, Calcium-, Cer-, Chlor-, Cobalt-, Eisen-, Phosphor-, Kohlenstoff-, Mangan-, Sauerstoff-, Schwefel-, Silicium-, Stickstoff-, Strontium-, Vanadium-, Zink-, Zinn- und/oder Zirkon-Verbindungen bzw. Salzen. Beispielhaft genannt seien Natriumsilikat, Natriumaluminat und Aluminiumsulfat.

Die anorganische Oberflächenbehandlung des ultrafeinen Titandioxids findet in wässriger Aufschlämmung statt. Die Reaktionstemperatur soll dabei vorzugsweise 50°C nicht übersteigen. Der pH-Wert der Suspension wird, beispielsweise unter Verwendung von NaOH auf pH-Werte im Bereich größer 9 eingestellt. Unter starkem Rühren werden dann die Nachbehandlungschemikalien (anorganische Verbindungen), vorzugsweise wasserlösliche anorganische Verbindungen wie beispielsweise Aluminium-, Antimon-, Barium-, Calcium-, Cer-, Chlor-, Cobalt-, Eisen-, Phosphor-, Kohlenstoff-, Mangan-, Sauerstoff-, Schwefel-, Silicium-, Stickstoff-, Strontium-, Vanadium-, Zink-, Zinn- und/oder Zirkon-Verbindungen oder Salze zugegeben. Der pH-Wert und die Mengen an Nachbehandlungschemikalien werden erfindungsgemäß so gewählt, dass letztere vollständig in Wasser gelöst vorliegen. Die Suspension wird intensiv gerührt, so dass sich die Nachbehandlungschemikalien homogen in der Suspension verteilen, vorzugsweise für mindestens 5 Minuten. Im nächsten Schritt wird der pH-Wert der Suspension abgesenkt. Als vorteilhaft hat sich dabei erwiesen, den pH-Wert langsam und unter starkem Rühren abzusenken. Besonders vorteilhaft wird der pH-Wert innerhalb von 10 bis 90 Minuten auf Werte von 5 bis 8 abgesenkt. Im Anschluss daran schließt sich erfindungsgemäß eine Reifezeit, vorzugsweise eine Reifezeit von etwa einer Stunde an. Die Temperaturen sollen dabei vorzugsweise 50°C nicht überschreiten. Die wässrige Suspension wird dann gewaschen und getrocknet. Zur Trocknung des ultrafeinem, oberflächenmodifizierten Titandioxids bieten sich beispielsweise die Sprühtrocknung, die Gefriertrocknung und/oder die Mahltrocknung an. Abhängig vom Trocknungsverfahren kann eine anschließende Mahlung der getrockneten Pulver notwendig sein. Die Mahlung kann nach an sich bekannten Verfahren durchgeführt werden.

Erfindungsgemäß sind folgende Verbindungen als organische Oberflächenmodifikatoren besonders geeignet: Polyether, Silane, Polysiloxane, Polycarbonsäuren, Fettsäuren, Polyethylenglykole, Polyester, Polyamide, Polyalkohole, organische Phosphonsäuren, Titanate, Zirkonate, Alkyl- und/oder Arylsulfonate, Alkyl- und/oder Arylsulfate, Alkyl- und/oder Arylphosphorsäureester.

Die Herstellung von organisch oberflächenmodifiziertem Titandioxid kann nach an sich bekannten Verfahren durchgeführt werden.

Dabei handelt es sich zum einen um die Oberflächenmodifizierung in wässriger oder lösemittelhaltiger Phase. Zum anderen kann die organische Komponente durch direktes Aufsprühen und anschließendes Mischen/Mahlen auf die Partikeloberfläche aufgebracht werden.

Erfindungsgemäß werden geeignete organische Verbindungen unter starkem Rühren und/oder während einer Dispergierung zu einer Titandioxid-Suspension gegeben. Dabei werden die organischen Modifizierungen über Chemisorption/Physisorption an die Partikeloberfläche gebunden.

Als organische Verbindungen eignen sich besonders Verbindungen ausgewählt aus der Gruppe der Alkyl- und/oder Arylsulfonate, Alkyl- und/oder Arylsulfate, Alkyl- und/oder Arylphosphorsäureester oder Mischungen aus mindestes zwei dieser Verbindungen, wobei die Alkyl- oder Arylreste durch funktionelle Gruppen substituiert sein können. Auch können die organischen Verbindungen Fettsäuren sein, die ggf. funktionelle Gruppen besitzen. Auch Mischungen aus mindestens zwei solcher Verbindungen können eingesetzt werden.

Beispielsweise eingesetzt werden: Alkylsulfonsäuresalz, Natriumpolyvinylsulfonat, Natrium-N-alkyl-benzolsulfonat, Natriumpolystyrolsulfonat, Natriumdodecylbenzolsulfonat, Natriumlaurylsulfat, Natriumcetylsulfat, Hydroxylaminsulfat, Triethanolammoniumlaurylsulfat, Phosphorsäuremonoethylmonobenzylester, Lithiumperfluoroctansulfonat, 12-Brom-1-dodecansulfonsäure, Natium-10-hydroxy-1-decansulfonat, Natrium-Carrageenan, Natrium-10-Mercapto-1-Cetansulfonat, Natrium-16-Ceten(1)-sulfat, Oleylcetylalkoholsulfat, Ölsäuresulfat, 9,10-Dihydroxystearinsäure, Isostearinsäure, Stearinsäure, Ölsäure.

Das organisch modifizierte Titandioxid kann entweder direkt in Form der vorliegenden wässrigen Paste eingesetzt oder vor der Anwendung getrocknet werden. Die Trocknung kann nach an sich bekannten Verfahren durchgeführt werden. Für die Trocknung bietet sich insbesondere der Einsatz von Konvektionstrocknern, Sprühtrocknern, Mahltrocknern, Gefriertrocknern und/oder Pulsationstrocknern an. Andere Trockner sind jedoch erfindungsgemäß ebenso einsetzbar. Abhängig vom Trocknungsverfahren kann eine anschließende Mahlung der getrockneten Pulver notwendig sein. Die Mahlung kann nach an sich bekannten Verfahren durchgeführt werden.

Erfindungsgemäß haben die oberflächenmodifizierten Titandioxidpartikel optional ein oder mehrere funktionelle Gruppen, beispielsweise eine oder mehrere Hydroxy-, Amino-, Carboxyl-, Epoxy-, Vinyl-, Methacrylat- und/oder Isocyanat-Gruppen, Thiole, Alkylthiocarboxylate, Di- und/oder polysulfidische Gruppen.

Bevorzugt sind Oberflächenmodifikatoren, die über eine funktionelle Gruppe an die Titandioxidpartikel gebunden sind und über eine andere funktionelle Gruppe mit der polymeren Matrix wechselwirken.

Die Oberflächenmodifikatoren können chemisch und/oder physikalisch an die Partikeloberfläche gebunden sein. Die chemische Bindung kann kovalent oder ionisch sein. Als physikalische Bindung sind Dipol-Dipol- oder Van-der-Waals-Bindungen möglich. Bevorzugt ist die Anbindung der Oberflächenmodifikatoren über kovalente Bindungen oder über physikalische Dipol-Dipol-Bindungen.

Erfindungsgemäß besitzen die oberflächenmodifizierten Titandioxidpartikel die Fähigkeit, über die Oberflächenmodifikatoren teilweise oder ganz eine chemische und/oder physikalische Bindung zur polymeren Matrix einzugehen. Als chemische Bindungsarten sind kovalente und ionische Bindungen geeignet. Als physikalische Bindungsarten sind Dipol-Dipol- und Van-der-Waals-Bindungen geeignet.

Vorzugsweise kann zur Herstellung des erfindungsgemäßen Komposits zunächst ein Masterbatch hergestellt werden, der vorzugsweise 5-80 Gew. % Titandioxid enthält. Dieses Masterbatch kann dann entweder nur mit dem Rohpolymer verdünnt oder mit den weiteren Bestandteilen der Rezeptur vermischt und ggf. nochmals dispergiert werden.

Zur Herstellung des erfindungsgemäßen Komposits kann auch ein Verfahren gewählt werden, wobei das Titandioxid zunächst in organischen Substanzen insbesondere in Polyolen, Polyglycolen, Polyethern, Dicarbonsäuren und deren Derivate, AH-Salz, Caprolactam, Paraffinen, Phosphorsäureestern, Hydroxycarbonsäureestern, Cellulose, Styrol, Methylmethacrylat, organischen Diamiden, Epoxidharzen und Weichmachern (u.a. DOP, DIDP, DINP) eingearbeitet und dispergiert wird. Diese mit Titandioxid versetzten organischen Substanzen können dann als Ausgangsmaterial für die Komposit-Herstellung genutzt werden.

Zur Dispergierung vom Titandioxid im Masterbatch bzw. in organischen Substanzen können übliche Dispergierverfahren, insbesondere unter Verwendung von Schmelzeextrudern, Dissolvern, Dreiwalzen, Kugelmühlen, Perlmühlen, Tauchmühlen, Ultraschall oder Knetern verwendet werden. Besonders vorteilhaft ist die Verwendung von Tauchmühlen oder Perlmühlen mit Perlendurchmessern von d < 1,5 mm.

Das erfindungsgemäße Komposit hat überraschenderweise herausragende mechanische und tribologische Eigenschaften. Im Vergleich zum ungefüllten Polymer haben die erfindungsgemäßen Komposite deutlich verbesserte Biegemodule, Biegefestigkeiten, Zugmodule, Zugfestigkeiten, Risszähigkeiten, Bruchzähigkeiten, Schlagzähigkeiten und Verschleißraten.

Gegenstand der Erfindung sind im Einzelnen:

- Komposite, bestehend aus mindestens einem Thermoplast, mindestens einem Hochleistungskunststoff und/oder mindestens einem Epoxidharz und einem gefällten, oberflächenmodifiziertem Titandioxid, dessen Kristallitgröße $d_{50}$ kleiner 350 nm, bevorzugt kleiner 200 nm ist und besonders bevorzugt zwischen 3 und 50 nm beträgt und wobei das Titandioxid sowohl anorganisch und/oder organisch oberflächenmodifiziert sein kann (nachfolgend auch Titandioxid-Komposite genannt);

- Titandioxid-Komposite, wobei als Thermoplast Polyester, Polyamid, PET, Polyethylen, Polypropylen, Polystyrol, dessen Copolymerisate und Blends, Polycarbonat, PMMA oder PVC eingesetzt wird;

- Titandioxid-Komposite, wobei als Hochleistungskunststoff PTFE, Fluor-Thermoplaste (z. B. FEP, PFA, u.a. ), PVDF, Polysulfone (z. B. PES, PSU, PPSU, u.a.), Polyetherimid, flüssigkristalline Polymere und Polyetherketone eingesetzt wird.

- Titandioxid-Komposite, wobei als Duromer ein Epoxidharz eingesetzt wird;

- Titandioxid-Komposite, wobei das Komposit 12 bis 99,8 Gew.-% Thermoplast, 0,1 bis 60 Gew.-% gefälltes, oberflächenmodifiziertes Titandioxid, 0 bis 80 Gew.-% mineralischen Füllstoff und/oder Glasfaser, 0,05 bis 10 Gew.-% Antioxidant, 0 bis 2,0 Gew.-% organischen Metalldesaktivator, 0 bis 2,0 Gew.-% Prozessadditive (u. a. Dispergierhilfen, Haftvermittler), 0 bis 10 Gew.-% Pigment, und 0 bis 40 Gew.-% Flammschutzmittel (z. B. Aluminiumhydroxid, Antimontrioxid, Magnesiumhydroxid,, u. a.) enthält.

- Titandioxid-Komposite, wobei das Komposit 12 bis 99,9 Gew-% Hochleistungskunststoff, 0,1 bis 60 Gew-% gefälltes, oberflächenmodifiziertes Titandioxid, 0 bis 80 Gew-% mineralischen Füllstoff und/oder Glasfaser, 0 bis 5,0 Gew-% Prozessadditive (u.a. Dispergierhilfen, Haftvermittler), 0 bis 10 Gew-% Pigment enthält.

- Titandioxid-Komposite, wobei das Komposit 20 bis 99,9 Gew.-% Epoxidharz, 0,1 bis 60 Gew.-% gefälltes, oberflächenmodifiziertes Titandioxid, 0 bis 80 Gew.-% mineralischen Füllstoff und/oder Glasfaser, 0 bis 10 Gew.-% Prozessadditive, 0 bis 10 Gew.-% Pigment, und 0 bis 40 Gew.-% Aluminiumhydroxid enthält;

- Titandioxid-Komposite, wobei der Anteil von gefälltem, oberflächenmodifiziertem Titandioxid im Komposit 0,1 bis 60 Gew.-%, bevorzugt 0,5 bis 30 Gew.-%, besonders bevorzugt 1,0 bis 20 Gew.-%, beträgt;

- Titandioxid-Komposite, wobei das Titandioxid eine anorganische und/oder eine organische Oberflächenmodifizierung besitzt;

- Titandioxid-Komposite, wobei die anorganische Oberflächenmodifizierung des ultrafeinen Titandioxids aus einer Verbindung besteht, die mindestens zwei der folgenden Elemente enthält: Aluminium-, Antimon-, Barium-, Calcium-, Cer-, Chlor-, Cobalt-, Eisen-, Phosphor-, Kohlenstoff-, Mangan-, Sauerstoff-, Schwefel-, Silicium-, Stickstoff-, Strontium-, Vanadium-, Zink-, Zinn- und/oder Zirkon-Verbindungen oder Salze;

- Titandioxid-Komposite, wobei die organische Oberflächenmodifizierung aus einem oder mehreren der folgenden Bestandteile besteht: Silane, Siloxane, Polysiloxane, Polycarbonsäuren, Polyester, Polyether, Polyamide, Polyethylenglykole, Polyalkohole, Fettsäuren, bevorzugt ungesättigte Fettsäuren, Polyacrylate, organische Phosphonsäuren, Titanate, Zirkonate, Alkyl- und/oder Arylsulfonate, Alkyl- und/oder Arylsulfate, Alkyl- und/oder Arylphosphorsäureester;

- Titandioxid-Komposite, wobei die Oberflächenmodifizierung eine oder mehrere der folgenden funktionellen Gruppen enthält: Hydroxyl-, Amino-, Carboxyl-, Epoxy-, Vinyl-, Methacrylat-, und/oder Isocyanat-Gruppen, Thiole, Alkylthiocarboxylate, Di- und/oder polysulfidische Gruppen;

- Titandioxid-Komposite, wobei die Oberflächenmodifizierung kovalent an die Partikeloberfläche angebunden ist;

- Titandioxid-Komposite, wobei die Oberflächenmodifizierung ionisch an die Partikeloberfläche gebunden ist;

- Titandioxid-Komposite, wobei die Oberflächenmodifizierung über physikalische Wechselwirkungen an die Partikeloberfläche gebunden ist;

- Titandioxid-Komposite, wobei die Oberflächenmodifizierung durch eine Dipol-Dipol- oder eine Van-der-Waals-Wechselwirkung an die Partikeloberfläche gebunden ist;

- Titandioxid-Komposite, wobei die oberflächenmodifizierten Titandioxidpartikel eine Bindung zur polymeren Matrix eingehen;

- Titandioxid-Komposite, wobei eine chemische Bindung zwischen den Titandioxidpartikeln und der polymeren Matrix vorliegt;

- Titandioxid-Komposite, wobei die chemische Bindung zwischen den Titandioxidpartikeln und der polymeren Matrix eine kovalente und/oder eine ionische Bindung ist;

- Titandioxid-Komposite, wobei eine physikalische Bindung zwischen den Titandioxidpartikeln und der polymeren Matrix vorliegt;

- Titandioxid-Komposite, wobei die physikalische Bindung zwischen den Titandioxidpartikeln und der polymeren Matrix eine Dipol-Dipol-Bindung (Keeson), eine induzierte Dipol-Dipol-Bindung (Debye) oder eine dispersive Bindung (Van-der-Waals) ist;

- Titandioxid-Komposite, wobei eine physikalische und eine chemische Bindung zwischen den Titandioxidpartikeln und der polymeren Matrix vorliegen;

- Verfahren zur Herstellung der Titandioxid-Komposite;

- Verfahren zur Herstellung der Titandioxid-Komposite, wobei zunächst ein Masterbatch hergestellt wird und das Titandioxid-Komposit durch Verdünnung des Masterbatches mit dem Rohpolymer erhalten wird, wobei das Masterbatch 5-80 Gew.-% Titandioxid, bevorzugt 15 - 60 Gew.-% Titandioxid enthält;

- Verfahren zur Herstellung der Titandioxid-Komposite, bei dem das Titandioxid enthaltende Masterbatch mit dem Rohpolymer verdünnt wird und sich vorzugsweise eine Dispergierung anschließt;

- Verfahren zur Herstellung der Titandioxid-Komposite, bei dem das Masterbatch mit den weiteren Bestandteile der Rezeptur in einem oder mehreren Schritten vermischt wird und sich vorzugsweise noch eine Dispergierung anschließt;

- Verfahren zur Herstellung der Titandioxid-Komposite, wobei das Titandioxid zunächst in organischen Substanzen insbesondere in Polyolen, Polyglycolen, Polyethern, Dicarbonsäuren und deren Derivate, AH-Salz, Caprolactam, Paraffinen, Phosphorsäureestern, Hydroxycarbonsäureestern, Cellulose, Styrol, Methylmethacrylat, organische Diamiden, Epoxidharzen und Weichmachern (u.a. DOP, DIDP, DINP) eingearbeitet und dispergiert wird;

- Verfahren zur Herstellung der Titandioxid-Komposite, wobei die mit Titandioxid versetzten organischen Substanzen als Ausgangsmaterial für die Komposit-Herstellung genutzt werden;

- Verfahren zur Herstellung der Titandioxid-Komposite, wobei die Dispergierung des Titandioxids im Masterbatch bzw. in den organischen Substanzen mittels üblicher Dispergierverfahren, insbesondere unter Verwendung von Schmelzextrudern, Dissolvern, Dreiwalzen, Kugelmühlen, Perlmühlen, Tauchmühlen, Ultraschall oder Knetern durchgeführt wird;

- Verfahren zur Herstellung der Titandioxid-Komposite, wobei für die Dispergierung des Titandioxids vorzugsweise Tauchmühlen oder Perlmühlen verwendet werden;

- Verfahren zur Herstellung der Titandioxid-Komposite, wobei für die Dispergierung des Titandioxids vorzugsweise Perlmühlen verwendet werden, wobei die Perlen vorzugsweise Durchmesser von d < 1,5 mm, besonders vorzugsweise von d < 1,0 mm, ganz besonders vorzugsweise von d < 0,3 mm besitzen;

- Titandioxid-Komposite, die verbesserte mechanische Eigenschaften und verbesserte tribologische Eigenschaften besitzen;

- Titandioxid-Komposite, bei denen gleichzeitig die Festigkeit und die Zähigkeit durch den Einsatz der oberflächenmodifizierten Titandioxidpartikel verbessert werden;

- Titandioxid-Komposite, bei denen die Verbesserung der Festigkeit und Zähigkeit in einem Biegeversuch oder einem Zugversuch beobachtet werden können;

- Titandioxid-Komposite, die verbesserte Schlagzähigkeiten und/oder verbesserte Kerbschlagzähigkeiten besitzen;

- Titandioxid-Komposite, bei denen die Verschleißfestigkeit durch den Einsatz der oberflächenmodifizierten Titandioxidpartikel verbessert wird;

- Titandioxid-Komposite, bei denen die Kratzfestigkeit durch den Einsatz der oberflächenmodifizierten Titandioxidpartikel verbessert wird;

- Titandioxid-Komposite, bei denen die Spannungsrissbeständigkeit durch den Einsatz der oberflächenmodifizierten Titandioxidpartikel verbessert wird;

- Titandioxid-Komposite, bei denen eine Verbesserung der Kriechbeständigkeit beobachtet werden kann;

- Verwendung der Titandioxid-Komposite als Ausgangsmaterial für die Herstellung von Formkörpern, Halbzeugen, Folien oder Fasern, insbesondere für die Herstellung von Spritzgussteilen, Blasformen oder Fasern;

- Verwendung der Titandioxid-Komposite in Form von Fasern, die sich vorzugsweise durch verbesserte Reißfestigkeiten auszeichnen;

- Verwendung der Titandioxid-Komposite für Bauteile für den Automobil, Luftfahrt- oder den Raumfahrt-Bereich, insbesondere in Form von Gleitlagern, Zahnrädern, Walzen- oder Kolbenbeschichtungen

- Verwendung der Titandioxid-Komposite beispielsweise zur Herstellung von Bauteilen im Gussverfahren, als Klebstoff, als Industriefußboden, als Betonbeschichtung, als Betonreparatur, als Korrosionsschutzbeschichtung, zum Vergießen von elektrischen Bauteilen oder anderen Objekten, zur Sanierung von Metallrohren, als Trägermaterial in der Kunst oder zum Abdichten von Holzterrarien.

Die Erfindung wird durch die nachfolgenden Beispiele erläutert, ohne sie darauf einzuschränken.

Herstellung von anorganisch oberflächenmodifiziertem Titandioxid:

3,7 kg einer 6,5 Gew.-%igen wässrigen Suspension ultrafeiner Titandioxid-Partikel mit mittleren Primärpartikeldurchmessern $d_{50}$ von 14 nm (Ergebnis von TEM-Untersuchungen) werden unter Rühren auf eine Temperatur von 40°C erhitzt. Mit 10 %iger Natronlauge wird der pH-Wert der Suspension auf 12 eingestellt. Unter starkem Rühren werden gleichzeitig 14,7 ml einer wässrigen Natriumsilikatlösung (284 g $SiO_2$/L), 51,9 ml einer Aluminiumsulfat-Lösung (mit 75 g $Al_2O_3$/L) und 9,7 ml einer Natriumaluminat-Lösung (275 g $Al_2O_3$/L) unter Einhaltung des pH-Wertes von 12,0 zur Suspension gegeben. Die Suspension wird für weitere 10 Minuten unter starkem Rühren homogenisiert. Anschließend wird der pH-Wert langsam, vorzugsweise innerhalb von 60 Minuten, durch Zugabe einer 5 %igen Schwefelsäure auf einen pH-Wert von 7,5 eingestellt. Es schließt sich eine Reifezeit von 10 Minuten bei ebenfalls einer Temperatur 40°C an. Die Suspension wird dann auf eine Leitfähigkeit kleiner 100 μS/cm gewaschen und anschließend sprühgetrocknet.

Beispiel 1

Als Ausgangsmaterial wird ein gefälltes, oberflächenmodifiziertes Titandioxid verwendet, das eine Kristallitgröße $d_{50}$ von 14 nm besitzt. Die Titandioxidoberfläche ist anorganisch und organisch oberflächenmodifiziert. Die anorganische Oberflächenmodifizierung besteht aus einer Aluminium-Sauerstoff-Verbindung. Die organische Oberflächenmodifizierung besteht aus einem Polyalkohol. Der Polyalkohol geht mit der Oberfläche des Titandioxides eine physikalische Wechselwirkung ein. In einem Polyamid können die verbleibenden OH-Gruppen des Polyalkohols mit den Carbonyl-Resten (-C=O) des Polyamids eine Dipol-Dipol-Wechselwirkung eingehen.

Zunächst wird ein 15 Vol.-%iges Komposit aus dem beschriebenem Titandioxid in Polyamid 66 mittels Extrusion hergestellt. Aus diesem Material werden Prüfkörper zur Prüfung der Biegefestigkeit (nach DIN EN ISO 178), der Zugfestigkeit (nach DIN EN ISO 527), der Schlagzähigkeit (nach ASTM E399-90) und der Kriechdehnung (nach DIN EN ISO 899-1) gefertigt. Die Ergebnisse der Prüfung sind in den Tabellen 1 und 2 aufgeführt. Der Einsatz des oberflächenmodifizierten Titandioxid hat die Biegefestigkeit, das Biegemodul, die Schlagzähigkeit, die Zugfestigkeit und die Kriechdehnung im Vergleich zum ungefüllten Polyamid 66 deutlich verbessert.

Tabelle 1: Ergebnisse des 3-Punkt-Biegeversuchs des Komposits aus Beispiel 1 im Vergleich zum ungefüllten Polyamid 66 (PA 66)

| Probe | Biegefestigkeit [MPa] | Biegemodul [MPa] |
|---|---|---|
| PA66 | 40 | 950 |
| PA66 + 15 Vol.% oberflächenmodifiziertes Titandioxid | 55 | 1420 |

Tabelle 2: Zugfestigkeit, Schlagzähigkeit und Kriechdehnung des Komposits aus Beispiel 1 im Vergleich zum ungefüllten Polyamid 66 (PA 66)

| Probe | Zugfestigkeit [MPa] | Schlagzähigkeit [kJ/m$^2$] | Kriechdehnung [%] |
|---|---|---|---|
| PA66 | 33 | 2,1 | 1,4 |
| PA66 + 15 Vol.°% oberflächenmodifiziertes Titandioxid | 46 | 3,5 | 0,9 |

Beispiel 2

Das 15 Vol.-%ige Komposit aus Beispiel 1 wurde mittels Extrusion auf Partikelgehalte von 0,5 - 7,0 Vol.-% verdünnt. Aus diesen Kompositen und dem 15 Vol.-%igen Komposit wurden Probekörper für die Prüfung der Kerbschlagzähigkeit nach Charpy (DIN EN ISO 179) hergestellt. Die Ergebnisse der Prüfung der Kerbschlagzähigkeit sind in der Abbildung 1 aufgetragen. Die Kerbschlagzähigkeit der Komposite ist im Vergleich zum ungefüllten Polyamid 66 signifikant erhöht. Überraschenderweise führen sehr niedrige Partikelgehalte von 0,5 - 2,0 Vol.% zu den höchsten Kerbschlagzähigkeiten.

Abbildung 1: Kerbschlagzähigkeit der Komposite aus Beispiel 1 und 2 als Funktion des Partikelgehaltes

Beispiel 3

Als Ausgangsmaterial wird ein gefälltes, oberflächenmodifiziertes Titandioxid verwendet, das eine Kristallitgröße $d_{50}$ von 14 nm besitzt. Die Titandioxidoberfläche ist anorganisch und organisch oberflächenmodifiziert. Die anorganische Oberflächenmodifizierung besteht aus einer Aluminium-Sauerstoff-Verbindung. Die organische Oberflächenmodifizierung besteht aus einem Polyalkohol. Der Polyalkohol geht mit der Oberfläche des Titandioxides eine physikalische Wechselwirkung ein.

Als polymere Matrix wird das kommerziell erhältliche Epoxidharz Epilox A 19-03 der Fa. Leuna-Harze GmbH verwendet. Als Härter wird der aminische Härter HY 2954 der Fa. Vantico GmbH & Co KG verwendet.

Zunächst wird das pulverförmige Titandioxid in das flüssige Epoxydharz unter Dissolverdispergierung mit einem Gehalt von 14 Vol.-% eingearbeitet. Nach dieser Vordispergierung wird das Gemisch mit einer Tauchmühle 90 Minuten bei einer Drehzahl von 2500 U/min dispergiert. Als Perlen werden 1 mm Zirkondioxidperlen verwendet. Dieser Ansatz wird mit dem Reinharz gemischt, so dass nach Zugabe des Härters Komposite entstehen, die 2 Vol.-% bzw. 10 Vol.-% Titandioxid enthalten. Die Aushärtung der Komposite erfolgt im Trockenschrank.

Beispiel 4

Für die nachfolgend beschriebenen mechanischen Prüfungen des Komposits aus Beispiel 3 werden Prüfkörper mit definierten Abmessungen hergestellt. Die mechanische Charakterisierung erfolgt in einem Dreipunktbiegeversuch nach DIN EN ISO 178 anhand von Probekörpern, die aus gegossenen Platten mit einer Präzisionssäge herausgearbeitet wurden. Mindestens fünf Proben der Abmessungen 80 x 10 x 4 mm³ werden bei einer Prüfgeschwindigkeit von 2 mm/min bei Zimmertemperatur geprüft.

Die Bestimmung der Bruchzähigkeit $K_{IC}$ (nach ASTM E399-90) erfolgt bei einer Prüfgeschwindigkeit von 0,1 mm/min mittels Compact Tension (CT) Probekörpern. In den CT-Proben wurde ein scharfer Anriss durch den kontrollierten Impact einer Rasierklinge erzeugt. Dadurch ergibt sich an der Rissspitze der zur Ermittlung des kritischen Spannungsintensitätsfaktors erforderliche ebene Dehnungszustand.

Die Ergebnisse der Biegeversuche und der Prüfung der Bruchzähigkeit sind in der Tabelle 3 aufgeführt. Die erfindungsgemäßen Komposite zeigen im Vergleich zum Reinharz stark verbesserte Eigenschaften. Die Biegefestigkeit konnte um 11 %, das Biegemodul sogar um 45 % im Vergleich zum ungefüllten Reinharz verbessert werden. Die Bruchzähigkeit wurde um ca. 40 % erhöht.

Tabelle 3: Ergebnisse des Biegeversuchs und der Prüfung der Bruchzähigkeit der Komposite aus Beispiel 3 bzw. 4

| Probe | Biegemodul [MPa] | Biegefestigkeit [MPa] | Bruchzähigkeit [MPa m½] |
|---|---|---|---|
| Reinharz (Epilox A 19-03) | 2800 | 132 | 0,63 |
| Reinharz + 2 Vol.-% Titandioxid | 2900 | 134 | 0,80 |
| Reinharz + 10 Vol.-% Titandioxid | 4100 | 148 | 0,88 |

Beispiel 5

Aus dem Komposit des Beispiels 3 werden Prüfkörper (Pins) der Abmessungen 4 x 4 x 20 mm$^3$ gesägt. Diese Prüfkörper werden mit Hilfe der Modell-Prüfanordnung "Block und Ring" (Abbildung 2), anhand derer sich Abrasiwerschleißversuche durchführen lassen, tribologisch charakterisiert. Beim Abrasiwersuch dienen geschliffene Nadellagerrinnenringe aus Stahl 100Cr6 mit einem Durchmesser von 60 mm als Gegenkörper, deren Oberfläche durch aufgeklebtes Korundpapier der Körnung 240 zur Erhöhung der Rauhigkeit modifiziert wurde. Vor Beginn des Versuchs werden die Stahlringe mit Aceton gereinigt, um störende Öl- oder Schmutzrückstände zu beseitigen. Die Prüfkörper wurden ebenfalls gereinigt und ihre Anfangsmasse $m_A$ mit der Präzisionswaage bestimmt. Zur Durchführung der Verschleißversuche werden die Proben mit einer konstanten Flächenpressung p gegen die entsprechende Kontaktfläche des Gegenkörpers gedrückt, der mit konstanter Drehzahl rotiert. Ein Gewicht mit definierter Masse erzeugt über einen Hebelarm den gewünschten Anpressdruck bzw. die Normalkraft $F_N$. Alle Versuche werden bei Zimmertemperatur und einer Versuchsdauer von 30 Sekunden durchgeführt, wobei die Flächenpressung p systematisch variiert wird. Aus statistischen Gründen werden vier Proben jeden Materials geprüft. Nach Beendigung des Versuchs werden die verschleißbedingte Gewichtsabnahme Δm der Proben bestimmt. Daraus ließ sich die spezifische Verschleißrate $w_s$ gemäß folgender Formel berechnen:

$$w_S = \frac{\Delta m}{\rho t v F_N}$$

Δm:     Gewichtsabnahme
ρ :     Dichte
v:     Rotationsgeschwindigkeit des Gegenkörpers
t:     Laufzeit
$F_N$:     Normalkraft

Abbildung 3 zeigt die gemessene Verschleißrate als Funktion des Anpressdrucks. Unabhängig vom Anpressdruck ist die Verschleißrate der erfindungsgemäßen Komposite (Epilox A19-03/ TiO$_2$ 2 Vol.-% und Epilox A19-03/ TiO$_2$ 10 Vol.-%) deutlich niedriger, als die Verschleißrate des Reinharzes. Insgesamt kann eine Verbesserung von bis zu 40 % erreicht werden.

Abbildung 2: Prüfanordnung „Block und Ring"

Abbildung 3: Spezifische Verschleißrate als Funktion des Anpressdrucks

Beispiel 6

Als Ausgangsmaterial wird ein gefälltes, oberflächenmodifiziertes Titandioxid verwendet, das eine Kristallitgröße $d_{50}$ von 14 nm besitzt. Die Titandioxidoberfläche ist anorganisch und organisch oberflächenmodifiziert. Die anorganische Oberflächenmodifizierung besteht aus einer Aluminium-Sauerstoff-Verbindung. Die organische Oberflächenmodifizierung besteht aus einem Epoxysilan, welches kovalente Bindungen zur polymeren Matrix ausbilden kann.

Als polymere Matrix wird das kommerziell erhältliche Epoxidharz Epilox A 19-03 der Fa. Leuna-Harze GmbH verwendet. Als Härter wird der aminische Härter HY 2954 der Fa. Vantico GmbH & Co KG verwendet.

Zunächst wird das pulverförmige Titandioxid in das flüssige Epoxydharz unter Dissolverdispergierung mit einem Gehalt von 14 Vol.-% eingearbeitet. Nach dieser Vordispergierung wird das Gemisch mit einer Tauchmühle 90 Minuten bei einer Drehzahl von 2500 U/min dispergiert. Als Perlen werden 1 mm Zirkondioxidperlen verwendet. Dieser Ansatz wird mit dem Reinharz gemischt, so dass nach Zugabe des Härters Komposite entstehen, die 2 Vol.-% bzw. 10 Vor.-% Titandioxid enthalten. Die Aushärtung der Komposite erfolgt im Trockenschrank.

Beispiel 7

Für die nachfolgend beschriebenen mechanischen Prüfungen des Komposits aus Beispiel 6 werden Prüfkörper mit definierten Abmessungen hergestellt. Die Prüfkörper-Herstellung und die mechanischen Untersuchungen an den Prüfkörpern finden analog zum Beispiel 4 statt.

Die Ergebnisse der Biegeversuche und Prüfung der Bruchzähigkeit sind in der Tabelle 4 aufgeführt. Die erfindungsgemäßen Komposite zeigen im Vergleich zum Reinharz stark verbesserte Eigenschaften.

Tabelle 4: Ergebnisse des Biegeversuchs und der Prüfung der Bruchzähigkeit

| Probe | Biegemodul [MPa] | Biegefestigkeit [MPa] | Bruchzähigkeit [MPa m$^{1/2}$] | Kerbschlagzähigkeit [kJ/m$^2$] |
|---|---|---|---|---|
| Reinharz (Epilox A 19-03) | 2380 | 69 | 0,63 | 0,9 |
| Reinharz +1 Vol.-% oberflächenmodifiziertes Titandioxid mit Dipol-Dipol-Wechselwirkungen | 3000 | 64 | 0,83 | n.b. |
| Reinharz + 2 Vol.-% oberflächenmodifiziertes Titandioxid mit vernetzenden Gruppen | 2390 | 84 | 0,78 | 1,2 |
| Reinharz + 10 Vol.-% oberflächenmodifiziertes Titandioxid mit vernetzenden Gruppen | 3600 | 85 | 1,42 | 1,6 |

**Patentansprüche**

1. Komposit aus Füllstoffen und Pigmenten in einer polymeren Matrix, die Titandioxid, mindestens einen Thermoplast, ausgewählt aus mindestens einem Polyamid, einem Polyethylen, einem Polypropylen, einem Polystyrol, dessen Copolymerisate und/oder Blends, einem Polycarbonat, einem PMMA und/oder einem Polyvinylchlorid oder dass als Thermoplast Mischungen von mindestens zweien dieser Thermoplaste, wobei das Komposit 12 bis 99,8 Gew.-% Thermoplast, 0,1 bis 60 Gew.-% Titandioxid, 0 bis 80 Gew.-% mineralischen Füllstoff und/oder Glasfaser, 0,05 bis 10 Gew.-% Antioxidant, 0 bis 2,0 Gew.-% organischen Metalldesaktivator, 0 bis 2,0 Gew.-% Prozessaddititve, 0 bis 10 Gew.-% Pigment, und 0 bis 40 Gew.-% Flammschutzmittel enthält, einen Hochleistungskunststoff, ausgewählt aus mindestens einem PTFE, einem Fluor-Thermoplast, PVDF, einem Polysulfon, einem Polyetherimid, einem flüssigkristallinen Polymer und/oder einem Polyetherketon oder aus Mischungen von mindestens zweien dieser Hochleistungskunststoffe, wobei das Komposit 12 bis 99,9 Gew-% Hochleistungskunststoff, 0,1 bis 60 Gew-% Titandioxid, 0 bis 80 Gew-% mineralischen Füllstoff und/oder Glasfaser, 0 bis 5,0 Gew-% Prozessaddititve, 0 bis 10 Gew-% Pigment enthält und/oder ein Epoxidharz, wobei das Komposit 20 bis 99,9 Gew-% Epoxidharz, 0,1 bis 60 Gew.-% Titandioxid, 0 bis 80 Gew.-% mineralischen Füllstoff und/oder Glasfaser, 0 bis 10 Gew.-% Prozessaddititve, 0 bis 10 Gew.-% Pigment, und 0 bis 40 Gew.-% Aluminiumhydroxid enthält, und die Kristallitgröße des Titandioxids $d_{50}$ zwischen 3 und 50 nm beträgt, **dadurch gekennzeichnet dass** das Titandioxid sowohl anorganisch als auch organisch oberflächenmodifiziert ist und der Gewichtsanteil der anorganischen Verbindungen bezogen auf Titandioxid 0,1 bis 50,0 Gew.-% beträgt, wobei die anorganischen Verbindungen ausgewählt sind aus wasserlöslichen Aluminium-, Antimon-, Barium-, Calcium-, Cer-, Chlor-, Cobalt-, Eisen-, Phosphor-, Kohlenstoff-, Mangan-, Sauerstoff-, Schwefel-, Silicium-, Stickstoff-, Strontium-, Vanadium-, Zink-, Zinn- und/oder Zirkon-Verbindungen oder Salzen und die organischen Verbindungen ausgewählt sind aus einer oder mehreren der folgenden Verbindungen: Silane, Siloxane, Polysiloxane, Polycarbonsäuren, Polyester, Polyether, Polyamide, Polyethylenglykole, Polyalkohole, Fettsäuren, bevorzugt ungesättigte Fettsäuren, Polyacrylate, organische Phosphonsäuren, Titanate, Zirkonate, Alkyl- und/oder Arylsulfonate, Alkyl- und/oder Arylsulfate, Alkyl- und/oder Arylphosphorsäureester.

2. Komposit gemäß Anspruch 1, **dadurch gekennzeichnet, dass** die oberflächenmodifizierten Titandioxidpartikel eine Bindung zur polymeren Matrix eingehen.

3. Verfahren zur Herstellung eines Komposits gemäß Anspruch 1 oder 2, **dadurch gekennzeichnet, dass** aus dem Titandioxid und einem Teil des Rohpolymers ein Masterbatch hergestellt wird und das Komposit durch Verdünnung des Masterbatches mit dem Rohpolymer unter Dispergierung erhalten wird.

**4.** Verfahren gemäß Anspruch 3, **dadurch gekennzeichnet, dass** aus dem Titandioxid und einem Teil des Rohpolymers ein Masterbatch hergestellt wird und das Komposit durch Verdünnung des Masterbatches mit dem Rohpolymer erhalten wird, wobei der Masterbatch 5 - 80 Gew.-% Titandioxid, bevorzugt 15 - 60 Gew.-% Titandioxid enthält.

**5.** Verfahren gemäß Anspruch 3 oder 4, **dadurch gekennzeichnet, dass** das Masterbatch mit den weiteren Bestandteile der Rezeptur in einem oder mehreren Schritten vermischt wird und sich vorzugsweise eine Dispergierung anschließt.

**6.** Verfahren gemäß einem oder mehreren der Ansprüche 3 bis 5, **dadurch gekennzeichnet, dass** das Titandioxid zunächst in organischen Substanzen, insbesondere in Aminen, Polyolen, Styrolen, Formaldehyden und dessen Formmassen, Vinylestern-Harzen, Polyesterharzen oder Silikonharzen eingearbeitet und dispergiert wird.

**7.** Verfahren gemäß einem oder mehreren der Ansprüche 3 bis 6, **dadurch gekennzeichnet, dass** die Dispergierung des Titandioxids vorzugsweise in Tauchmühlen oder Perlmühlen durchgeführt wird.

**8.** Verfahren gemäß einem oder mehreren der Ansprüche 3 bis 7, **dadurch gekennzeichnet, dass** die Dispergierung des Titandioxids in Perlmühlen durchgeführt wird, wobei Perlen mit Durchmessern von d < 1,5 mm, besonders bevorzugt von d < 1,0 mm, ganz besonders bevorzugt von d < 0,3 mm eingesetzt werden.

**9.** Verwendung eines Komposits gemäß Anspruch 1 oder 2 als Ausgangsmaterial für die Herstellung von Formkörpern, Halbzeugen, Folien oder Fasern, insbesondere für die Herstellung von Spritzgussteilen, Blasformen oder Fasern.

**10.** Verwendung eines Komposits gemäß Anspruch 1 oder 2 für Bauteile für den Automobil-, Luftfahrt- oder den Raumfahrt-Bereich, insbesondere in Form von Gleitlagern, Zahnrädern, Walzen- oder Kolbenbeschichtungen.

**11.** Verwendung eines Komposits gemäß Anspruch 1 oder 2 zur Herstellung von Bauteilen im Gussverfahren, als Klebstoff, als Industriefußboden, als Betonbeschichtung, als Betonreparatur, als Korrosionsschutzbeschichtung, zum Vergießen von elektrischen Bauteilen oder anderen Objekten, zur Sanierung von Metallrohren, als Trägermaterial in der Kunst oder zum Abdichten von Holzterrarien.

**Claims**

**1.** A composite of fillers and pigments in a polymer matrix, wherein the matrix contains titanium dioxide, at least one thermoplastic, selected from at least a polyamide, a polyethylene, a polypropylene, a polystyrene, co-polymerisates and/or blends thereof, a polycarbonate, a PMMA and/or a polyvinylchloride or, as thermoplastic, mixtures of at least two of said thermoplastics, wherein the composite contains 12 to 99.8 wt.% thermoplastic, 0.1 to 60 wt.% titanium dioxide, 0 to 80 wt.% mineral filler and/or glass fiber, 0.05 to 10 wt.% antioxidant, 0 to 2.0 wt.% organic metal deactivator, 0 to 2.0 wt.% process additives, 0 to 10 wt.% pigment, and 0 to 40 wt.% flame retardant, a high-performance plastic, selected from at least a PTFE, a fluor-thermoplastic, a PVDF, a polysulfone, a polyetherimide, a liquid crystalline polymer and/or a polyetherketone or from mixtures of at least two of said high-performance plastics, wherein the composite contains 12 to 99.9 wt.% high-performance plastic, 0.1 to 60 wt.% titanium dioxide, 0 to 80 wt.% mineral filler and/or glass fiber, 0 to 5.0 wt.% process additives, 0 to 10 wt.% pigment, and/or an epoxide resin, wherein the composite contains 20 to 99.9 wt.% epoxide resin, 0.1 to 60 wt.% titanium dioxide, 0 to 80 wt.% mineral filler and/or glass fiber, 0 to 10 wt.% process additives, 0 to 10 wt.% pigment, and 0 to 40 wt.% aluminum hydroxide, and the crystal size of the titanium dioxide $d_{50}$ is between 3 and 50 nm, **characterized in that** the titanium dioxide is both inorganically and organically surface-modified and the weight proportion of the inorganic compounds is 0.1 to 50.0 wt.% based on titanium dioxide, wherein the inorganic compounds are selected from water soluble aluminum-, antimony-, barium-, calcium-, cerium-, chlorine-, cobalt-, iron-, phosphor-, carbon-, manganese-, oxygen-, sulfur-, silicone-, nitrogen-, strontium-, vanadium-, zinc-, tin- and/or zirconium-compounds or salts and the organic compounds selected from one or more of the following compounds: silanes, siloxanes, polysiloxanes, polycarboxylic acids, polyesters, polyethers, polyamides, polyethyleneglycols, polyalcohols, fatty acids, preferably unsaturated fatty acids, polyacrylates, organic phosphonic acids, titanates, zirconates, alkyl- and/or arylsulfonates, alkyl- and/or arylsulfates, alkyl- and/or arylphosphoric acid esters.

**2.** The composite according to claim 1, **characterized in that** the surface-modified titanium dioxide particles are bonded to the polymer matrix.

3. A process for producing a composite according to claim 1 or 2, **characterized in that** a master batch is produced from the titanium dioxide and a part of the raw polymer and the composite is obtained by diluting the master batch with the raw polymer while dispersing.

4. The process according to claim 3, **characterized in that** a master batch is produced from the titanium oxide and a part of the raw polymer and the composite is obtained by diluting the master batch with a raw polymer, wherein the master batch contains 5 - 80 wt.% titanium dioxide, preferably 15 - 60 wt.% titanium dioxide.

5. The process according to claim 3 or 4, **characterized in that** the master batch is mixed with the additional components of the formulation in one or more steps, preferably followed by dispersion.

6. The process according to one or more of claims 3 to 5, **characterized in that** the titanium dioxide is initially incorporated and dispersed in organic substances, particularly into amines, polyols, styrols, formaldehydes and molding compositions thereof, vinyl ester-resins, polyester resins or silicone resins.

7. The process according to one or more of the claims 3 to 6, **characterized in that** the dispersion of the titanium dioxide is preferably carried out in basket mills or pearl mills.

8. The process according to one or more of claims 3 to 7, **characterized in that** the dispersion of the titanium dioxide is carried out in pearl mills, wherein the pearls having diameters of d < 1,5 mm, particularly preferred of d < 1,0 mm, even more particularly preferred of d < 0,3 mm are used.

9. Use of the composite according to claim 1 or 2 as starting material for producing molded bodies, semi-finished products, films or fibers, particularly for the production of injection-molded parts, blow-moldings or fibers.

10. Use of the composite according to claim 1 or 2 for structural elements for the automobile-, aviation- or the spaceflight-area, particularly in plain bearings, gear wheels, roller- or piston coatings.

11. Use of the composite according to claim 1 or 2 for producing structural elements in casting process, as adhesive, as industry floor, as concrete coating, as concrete repairing agent, as corrosion protection coating, for encapsulating electric structural elements or other objects, for renovating metal pipes, as support material in the art or for sealing wood terrarium.

## Revendications

1. Composite composé de matières de charge et de pigments dans une matrice polymère, qui contient du dioxyde de titane, au moins un thermoplastique, sélectionné parmi au moins un polyamide, un polyéthylène, un polypropylène, un polystyrène, leurs copolymères et/ou alliages, un polycarbonate, un PMMA et/ou un chlorure de polyvinyle ou, en tant que thermoplastique, des mélanges d'au moins deux de ces thermoplastiques, le composite contenant de 12 à 99,8 % en poids de thermoplastique, de 0,1 à 60 % en poids de dioxyde de titane, de 0 à 80 % en poids de matière de charge minérale et/ou de fibre de verre, de 0,05 à 10 % en poids d'antioxydant, de 0 à 2,0 % en poids de désactivateur de métaux organique, de 0 à 2,0 % en poids d'additifs de procédé, de 0 à 10 % en poids de pigment et de 0 à 40 % en poids de retardateur de flamme, une matière plastique à hautes performances sélectionnée parmi au moins un PTFE, un thermoplastique fluoré, un PVDF, un polysulfone, un polyétherimide, un polymère cristallin liquide et/ou un polyéthercétone ou parmi des mélanges d'au moins deux de ces matières plastiques à hautes performances, le composite contenant de 12 à 99,9 % en poids de matière plastique à hautes performances, de 0,1 à 60 % en poids de dioxyde de titane, de 0 à 80 % en poids de matière de charge minérale et/ou de fibre de verre, de 0 à 5,0 % en poids d'additifs de procédé, de 0 à 10 % en poids de pigment et/ou une résine époxy, le composite contenant de 20 à 99,9 % en poids de résine époxy, de 0,1 à 60 % en poids de dioxyde de titane, de 0 à 80 % en poids de matière de charge minérale et/ou de fibre de verre, de 0 à 10 % en poids d'additifs de procédé, de 0 à 10 % en poids de pigment et de 0 à 40 % en poids d'hydroxyde d'aluminium, et la taille de cristallite du dioxyde de titane $d_{50}$ étant comprise entre 3 et 50 nm, **caractérisé en ce que** le dioxyde de titane peut être modifié en surface aussi bien inorganiquement qu'organiquement et que la proportion en poids des composés inorganiques par rapport au dioxyde de titane est de 0,1 à 50,0 % en poids, les composés inorganiques étant sélectionnés parmi les composés ou sels d'aluminium, d'antimoine, de baryum, de calcium, de cérium, de chlore, de cobalt, de fer, de phosphore, de carbone, de manganèse, d'oxygène, de soufre, de silicium, d'azote, de strontium, de vanadium, de zinc, d'étain et/ou de zirconium solubles dans l'eau et les composés organiques étant sélectionnés parmi un ou plusieurs des composés suivants : silanes, siloxanes, polysiloxanes, acides polycarboxyliques, polyesters, polyéthers, polyamides, polyéthylène glycols, polyalcools, acides gras, de préférences acides gras insaturés, polyacrylates, acides phosphoniques organiques, titanates, zirconates, alkyl- et/ou arylsulfonates, alkyl- et/ou arylsulfates, esters d'acide alkyl- et/ou aryphosphorique.

**2.** Composite selon la revendication 1, **caractérisé en ce que** les particules de dioxyde de titane modifiées en surface forment une liaison avec la matrice polymère.

**3.** Procédé de fabrication d'un composite selon les revendications 1 ou 2, **caractérisé en ce qu'**un mélange maître est fabriqué à partir du dioxyde de titane et d'une partie du polymère brut et le composite est obtenu par dilution du mélange maître avec le polymère brut moyennant une dispersion.

**4.** Procédé selon la revendication 3, **caractérisé en ce qu'**un mélange maître est fabriqué à partir du dioxyde de titane et d'une partie du polymère brut et le composite est obtenu par dilution du mélange maître avec le polymère brut, le mélange maître contenant de 5 à 80 % en poids de dioxyde de titane, de préférence de 15 à 60 % en poids de dioxyde de titane.

**5.** Procédé selon les revendications 3 ou 4, **caractérisé en ce que** le mélange maître est mélangé avec d'autres composant de la recette en une ou plusieurs étapes et qu'une dispersion suit de préférence.

**6.** Procédé selon l'une ou plusieurs des revendications 3 à 5, **caractérisé en ce que** le dioxyde de titane est introduit et dispersé d'abord dans des substances organiques, en particulier dans des amines, des polyols, des styrènes, des formaldéhydes et leurs matières à mouler, des résines de vinylester, des résines de polyester ou des résines de silicone.

**7.** Procédé selon l'une ou plusieurs des revendications 3 à 6, **caractérisé en ce que** la dispersion du dioxyde de titane est effectuée de préférence dans des broyeurs à panier ou des broyeurs à billes.

**8.** Procédé selon l'une ou plusieurs des revendications 3 à 7, **caractérisé en ce que** la dispersion du dioxyde de titane est effectuée dans des broyeurs à billes, des billes d'un diamètre d < 1,5 mm, particulièrement de préférence d < 1,0 mm, tout particulièrement de préférence d < 0,3 mm étant utilisées.

**9.** Utilisation d'un composite selon les revendications 1 ou 2 comme matière première pour la fabrication de corps moulés, de semi-produits, de feuilles ou de fibres, en particulier pour la fabrication de pièces moulées par injection, de moules de soufflage ou de fibres.

**10.** Utilisation d'un composite selon les revendications 1 ou 2 pour des composants pour le domaine de l'automobile, de l'aéronautique ou du spatial, en particulier sous la forme de paliers lisses, de roues dentées, de revêtements de rouleaux ou de pistons.

**11.** Utilisation d'un composite selon les revendications 1 ou 2 pour la fabrication de composants par un procédé de coulée, comme adhésif, comme sol industriel, comme revêtement de béton, comme réparation du béton, comme revêtement anticorrosion, pour sceller des composants électriques ou d'autres objets, pour assainir des tubes métalliques, comme matériau de support dans l'art ou pour étanchéifier des terrariums en bois.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6667360 B